# EUROPÄISCHE PATENTSCHRIFT

(11) **EP 2 851 826 B1**
(45) Veröffentlichungstag und Bekanntmachung des Hinweises auf die Patenterteilung: **10.07.2019**
(21) Anmeldenummer: 14003206.1
(22) Anmeldetag: 16.09.2014
(51) Int. Cl.: G06F 21/10, G06F 21/60

(54) **VERFAHREN ZUR HANDHABUNG VON CONTENT MANAGEMENT OBJEKTEN**
METHOD FOR HANDLING CONTENT MANAGEMENT OBJECTS
PROCÉDÉ DE MANIPULATION D'OBJETS DE GESTION DE CONTENU

(30) Priorität: 18.09.2013 DE 102013015449
(43) Veröffentlichungstag der Anmeldung: 25.03.2015
(73) Patentinhaber: Giesecke+Devrient Mobile Security GmbH, 81677 München (DE)
(72) Erfinder: Stadler, Kurt, 82041 Oberhaching (DE); Galka, Gero, 83626 Valley (DE)

(56) Entgegenhaltungen:
- US-A1- 2003 217 264
- US-A1- 2013 226 872

## Beschreibung

### Technisches Gebiet

Die vorliegende Erfindung betrifft ein Verfahren zum Handhaben von Content Management Objekten, mit welchem es möglich ist Veränderungen, Aktualisierungen und dergleichen an Content Management Objekten vorzunehmen. Dabei soll trotz Veränderung des Inhalts des Content Management Objekt, die Sicherheit des Inhalts des Content Management Objekts beibehalten werden.

### Stand der Technik

Unter Content Management Objekten (auch als Inhaltshandhabungsobjekte bezeichnet) werden die Entitäten eines Sicherheits-Modells verstanden. Diese Entitäten repräsentieren globale (d.h. "off-device") Autorisierungsinstanzen auf dem jeweiligen Device (d.h. "on-device"). Ein Content Management Objekt regelt den Zugriff und definiert die Operationen, die in dem der jeweiligen Autorisierungsinstanz zugeordneten Bereich ausgeführt werden können. Das Sicherheitsmodell insgesamt ist dynamisch und kann im Zuge von Lebenszyklusoperationen durch Veränderung von Content Management Objekten sowie durch Hinzufügen oder Entfernung von Content Management Objekten modifiziert werden. Die Zulässigkeit dieser Modifikationen wird durch die für die jeweiligen Bereiche zuständigen Content Management Objekte gesteuert.

Verfahren zur Handhabung von Content Management Objekten sind im Stand der Technik bekannt. Beispielsweise offenbart die US 2004/0117309 A1 ein Verfahren, bei dem der Inhalt eines Content Management Objekts nur ausgeführt wird, wenn basierend auf der Verwendungseinschränkungsinformation eine Entscheidung erfolgt, dass die Content Daten verwendbar sind. Diese Verwendungseinschränkungsinformationen werden in einem geschützten Bereich des Endgeräts aufgezeichnet. Die Details dieser Information können nur auf eine autorisierte Weise verändert werden. Das heißt ein Teil des Content Management Objekts, der Einschränkungsinformationen enthält, wird in einem gesicherten Bereich des Mobilfunkgerätes abgespeichert.

Aus der EP 1 513 040 A1 geht ein Verfahren zum Verteilen von Inhaltszugangsdaten hervor, bei dem die Inhaltszugangsdaten Rechteverwaltungsdaten sind, die ein Recht eines Benutzers einen Inhalt zu reproduzieren und/ oder zu kopieren angeben. Das Verfahren wird vorwiegend dazu verwendet, um die Rechte an digitalen Daten, wie Musik- und Videowerken, zu verwalten.

Beide bekannten Lösungen weisen die Gemeinsamkeit auf, dass das Content Management Objekt lokal auf dem Endgerät gespeichert wird, beispielsweise in einem Mobilfunktelefon. Dies hat zur Konsequenz, dass die Sicherheit der Content Management Objekte nur bedingt hoch ist. Selbst wenn die Content Management Objekte in einer gesicherten Umgebung (beispielsweise in einer gesicherten Laufzeitumgebung; Trusted Execution Environment) gespeichert werden, könnten bei einem Angriff, bei dem ein vollständiges Abbild des gesamten Speichers erstellt wird, die Objekte auf beliebig vielen Endgeräten uneingeschränkt wiederverwendet werden, indem sie auf diese Endgeräte kopiert werden.

Aus der US 2003/0217264 A1 geht ein Verfahren zum Vorsehen einer sicheren Umgebung während der Verwendung von elektronischen Dokumenten hervor. Berechtigten Nutzern wird es damit ermöglicht auf Dokumente zuzugreifen, welche auf einem entfernten Server gespeichert sind. Die übertragenden Dokumente können verschlüsselt an den Nutzer gesendet werden.

### Darstellung der Erfindung

Der Erfindung liegt die Aufgabe zugrunde, ein Verfahren zur Handhabung von Content Management Objekten zu schaffen, das die bekannten Probleme aus dem Stand der Technik löst und ferner dazu geeignet ist, die Handhabung, Veränderung, Aktualisierung und dergleichen von Content Management Objekten wesentlich zu verbessern.

Die Lösung der Aufgabe erfolgt durch ein Verfahren mit den Merkmalen des unabhängigen Patentanspruchs 1. Bevorzugte Ausgestaltungen ergeben sich aus den Unteransprüchen.

Die Erfindung basiert auf dem Grundgedanken, Einrichtungen, die als sicher betrachtet werden, in Verbindung mit verschlüsselten Content Management Objekten zur Handhabung der selbigen einzusetzen.

Gemäß der Erfindung umfasst das Verfahren zur Handhabung von Content Management Objekte Schritte zum Übertragen eines Content Management Objekts von einem Server an ein Endgerät, das Entschlüsseln des Content Management Objekts in dem Endgerät, das Verändern des Content Management Objekts in dem Endgerät, das Verschlüsseln des veränderten Content Management Objekts in dem Endgerät, und das (Rück-)Übertragen des veränderten und verschlüsselten Content Management Objekt von dem Endgerät an bzw. auf den Server.

Gemäß der Erfindung handelt es sich bei einem "Content Management Objekt" um jegliche Art von (Daten- und Autorisierungs-) Objekt, an dem eine Lebenszyklusoperation ausgeführt werden kann. Content Management Objekte werden typischerweise in einer besonders gegen nichtautorisierte Zugriffe gesicherten Umgebung eines Endgerätes ausgeführt bzw. gespeichert. Zu den Aktionen, die an einem Content Management Objekt ausgeführt werden können, gehören beispielsweise das Ändern, Aktualisieren und/oder Löschen des Content Management Objekts. Ferner können Content Management Objekte auch neu erstellt werden um das Sicherheitsmodell zu erweitern. Beispielsweise ist es mit einem neu erzeugten Content Management Objekt möglich, eine vertrauenswürdige Komponente für den Zugriff auf einen Teil des Devices oder des Sicherheitsmodells zu autorisieren. Damit können dedizierte Bereiche für die Ausführung von sicherheitsrelevanten Anwendungen auf dem Device eingerichtet werden.

Ein "Endgerät" im Sinne der Erfindung ist beispielsweise ein Mobilfunkgerät, ein Mobiltelefon und/oder ein Tablet-PC.

Mit dem erfindungsgemäßen Verfahren ist es besonders vorteilhaft möglich, die Sicherheit bei der Handhabung von Content Management Objekten zu erhöhen, da diese nun nicht mehr auf dem Endgerät bzw. einer gesicherten Umgebung des Endgerätes dauerhaft gespeichert werden, sondern auf einem sicheren Server gespeichert sind und nur im Bedarfsfall von dem Server verschlüsselt an das Endgerät übertragen werden. Somit können alle Angriffe auf das Endgerät vermieden werden, bei denen beispielsweise ein komplettes Speicherabbild umfassend auch den gesicherten Bereich des Endgeräts erstellt wird und dieses Speicherabbild auf andere Endgeräte oder dieses Endgerät erneut aufgespielt wird (Replay Attacke). Zusätzlich kann durch das bedarfsgemäße Übertragen des Content Management Objekts an das Endgerät geschützter Speicherplatz auf dem Endgerät eingespart werden, da der Speicherbereich, der sonst von einer Vielzahl an Content Management Objekten eingenommen werden würde, nun deutlich kleiner ausgelegt werden kann. Durch das Speichern der Content Management Objekte auf einem sicheren Server verringert sich die Angriffswahrscheinlichkeit auf das Content Management Objekt wesentlich, da dieses nur noch kurzzeitig auf dem Endgerät vorhanden ist. Insbesondere kann das Sicherheitsmodell auch wieder hergestellt werden, wenn das Device korrumpiert oder gelöscht worden ist.

Gemäß einer Ausführungsform erfolgt die Übertragung des Content Management Objekts von dem Server an das Endgerät und/oder von dem Endgerät an den Server, über einen gesicherten Übertragungskanal. In anderen Worten wird zwischen Endgerät und Server vor der Übertragung des Content Management Objekts eine gesicherte Verbindung aufgebaut und erst dann wird das Content Management Objekt übertragen. Damit kann das Content Management Objekt bei der Übertragung weder verändert noch ausgetauscht werden.

Gemäß einer weiteren Ausführungsform erhöht sich die Sicherheit des erfindungsgemäßen Verfahrens zusätzlich, wenn das Content Management Objekt in eine gesicherte Umgebung auf dem Endgerät übertragen wird. Eine gesicherte Umgebung kann beispielsweise soft- und/ oder hardwaremäßig auf dem Endgerät bzw. auf der Chipkarte/Smartcard (UICC) des Endgerätes umgesetzt sein. In dieser gesicherten Umgebung unterliegen die dort abgelegten Content Management Objekte einem zusätzlichen Schutz, da der Speicherbereich der gesicherten Umgebung verstärkt gegen Angriffe von außen abgesichert ist.

Um das an das Endgerät verschlüsselt übertragene Content Management Objekt zu entschlüsseln, ist vorgesehen, dass dazu ein in dem Endgerät gespeicherter Schlüssel notwendig ist. Dies hat zum Vorteil, dass die auf dem Server gespeicherten Daten des Content Management Objekts ohne den zugehörigen Schlüssel nicht verwendet werden können. Da dieser Schlüssel gemäß einer bevorzugten Ausführungsform auf dem Endgerät so gespeichert ist, dass er nicht aus dem Endgerät ausgelesen werden kann, kann das jeweilige Content Management Objekt ausschließlich auf dem Endgerät entschlüsselt werden, auf dem es erzeugt worden ist. Anstatt des auf dem Endgerät gespeicherten Schlüssels kann auch ein von diesem abgeleiteter Schlüssel verwendet werden. Dadurch lassen sich Schlüsselbereiche definieren. Da alle Crypto-Operationen an dem Content Management Objekt nur auf dem Device erfolgen, braucht das Ableitungsverfahren selbst außerhalb des Devices nicht bekannt zu sein.

Ferner wird nach dem Übertragen des Content Management Objekts von dem Server an das Endgerät der Zustand des sich auf dem Server befindenden Content Management Objekts auf ungültig gesetzt. Auf diese Weise wird sichergestellt, dass, selbst wenn das Endgerät keine Veränderung an dem Content Management Objekt vornimmt, das Content Management Objekt wieder erneut verschlüsselt wird und die ursprüngliche Version des Content Management Objekts nicht mehr verwendbar ist. Dadurch erhöht sich die Sicherheit bei der Handhabung von Content Management Objekten zusätzlich.

Gemäß einer weiteren besonders bevorzugten Ausführungsform findet eine Übertragung des Content Management Objekts von dem Server an das Endgerät nur nach einer Anfrage durch das Endgerät statt. Auf diese Weise kann die bedarfsgemäße Übertragung von Content Management Objekten optimiert werden. Content Management Objekte werden nur übertragen, wenn dies von dem Endgerät angefordert wird.

Um eine Übertragung zwischen dem Server und dem Endgerät zu initiieren, kann vorgesehen sein, dass vorher eine wechselseitige Authentisierung stattfindet.

Gemäß einer weiteren besonders bevorzugten Ausführungsform ist es möglich, dass unterschiedliche Content Management Objekte von unterschiedlichen Servern an das Endgerät übertragen werden können. Auf diese Weise ist es besonders vorteilhaft möglich, Content Management Objekte für unterschiedliche Domänen auf dem Endgerät zu handhaben.

Gemäß einer weiteren besonders bevorzugten Ausführungsform ist das Content Management Objekt zumindest temporär in dem Endgerät zwischenspeicherbar, d.h. das Content Management Objekt kann in den Zwischenspeicher (Cache) des Endgeräts verschoben werden. Auf diese Weise ist es möglich, bedarfsgemäß Content Management Objekte zumindest für einen gewissen Zeitraum in dem Zwischenspeicher des Endgerätes zu speichern und ohne Interaktion mit einem Server für bestimmte Operationen zur Verfügung zu stellen. In diesem Fall ist es vorteilhaft, wenn der Zwischenspeicher zusätzlich abgesichert ist, um einen Angriff auf die Daten in dem Zwischenspeicher zu verhindern. Weiterhin ist es vorteilhaft, wenn die Cache-Verwaltung durch eine vertrauenswürdige Komponente des Systems (z.B. die Content Management Komponente selbst) durchgeführt wird (Cache-Speicher im Shared-Memory). Im Zusammenhang mit der Cache Verwaltung kann das Content Management Objekt gleichzeitig in zwei Versionen erzeugt werden; eine Version ist für den "on-device" Cache vorgesehen, die andere zur Speicherung am Server. Beide Versionen unterscheiden sich durch das "Source" Attribut, ansonsten sind sie inhaltsgleich. Damit kann bei der Ausführung unterschieden werden, von welcher Quelle das Content Management Objekt kommt; Operationen können so Objekte aus dem Cache ablehnen, sodass das Device gezwungen wird, mit dem Server zu interagieren.

Das erfindungsgemäße Verfahren kann besonders vorteilhaft eingesetzt werden, wenn ein Server und ein Endgerät zur Handhabung von Content Management Objekten eingesetzt werden sollen.

### Kurze Beschreibung der Zeichnungen

Nachfolgend wird die Erfindung anhand beispielhaft in den Zeichnungen dargestellter Ausführungsformen näher erläutert. Es zeigen:
Fig. 1 eine schematische Darstellung der in einem erfindungsgemäßen Verfahren eingesetzten Komponenten und
Fig. 2 den Ablauf eines erfindungsgemäßen Verfahrens anhand eines Flussdiagramms.

### Ausführliche Beschreibung bevorzugter Ausführungsformen der Erfindung

Im Folgenden wird die Erfindung anhand einer rein beispielhaften Ausführungsform beschrieben.

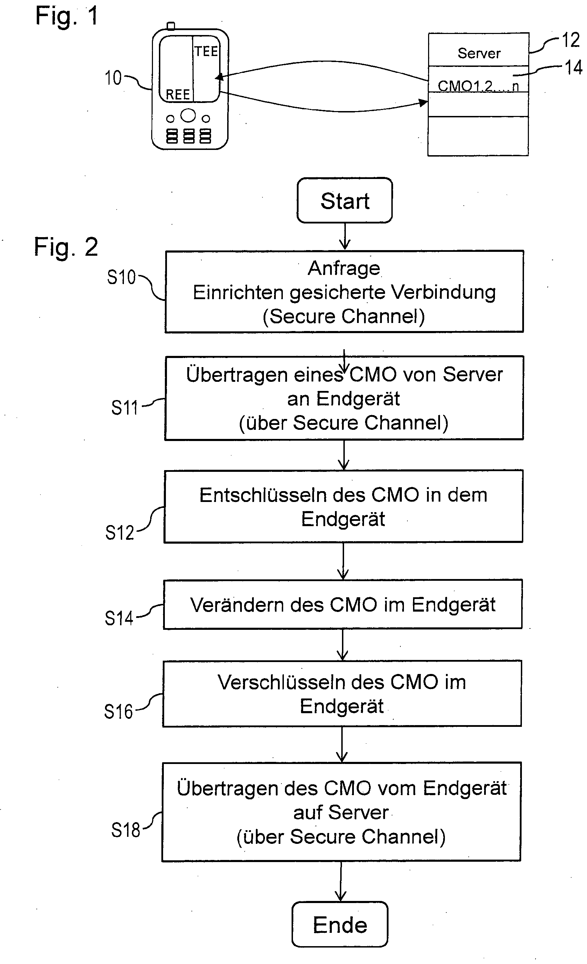

Fig. 1 zeigt die wesentlichen Komponenten, die in einem erfindungsgemäßen Verfahren eingesetzt werden. Zusätzlich sind die Datenströme bei dem erfindungsgemäßen Verfahren durch Pfeile aufgezeigt.

Gemäß der Erfindung sind auf einem Server 12 Content Management Objekte 14 abgespeichert. Der Server 12 kann auch die Gestalt einer Farm von Servern haben. Die Content Management Objekte 14 sind verschlüsselt auf dem Server 12 abgespeichert und können nur mit Hilfe eines Schlüssels (siehe unten) entschlüsselt werden.

Content Management Objekte sind (Daten-)Objekte, an denen eine Lebenszyklusoperation ausgeführt werden kann. Content Management Objekte werden typischerweise in einer besonders gegen nichtautorisierte Zugriffe gesicherten Umgebung eines Endgerätes ausgeführt bzw. gehandhabt. Zu den Aktionen, die an einem Content Management Objekt ausgeführt werden können, gehören beispielsweise das Ändern, Aktualisieren und/oder Löschen des Content Management Objekts. Ferner können Content Management Objekte auch neu erstellt werden, um das Sicherheitsmodell zu erweitern. Beispielsweise ist es mit einem neu erzeugten Content Management Objekt möglich, eine vertrauenswürdige Komponente für den Zugriff auf einen Teil des Devices oder des Sicherheitsmodells zu autorisieren. Damit können dedizierte Bereiche für die Ausführung von sicherheitsrelevanten Anwendungen auf dem Device eingerichtet werden.

Gelegentlich ist es erforderlich, dass ein Endgerät 10 Veränderungen an einem Content Management Objekt 14 vornimmt. Dazu wird mit dem Endgerät 10 eine Anfrage an den Server 12 gestellt, auf dem das entsprechende Content Management Objekt 14 abgelegt ist. Anschließend wird eine gesicherte Verbindung ("Secure Channel") zwischen dem Endgerät 10 und dem Server 12 aufgebaut. Dazu kann ein Schlüsselaustauschprotokoll eingesetzt (z.B. SCPxx) werden. Danach wird das verschlüsselte Content Management Objekt 14 über die gesicherte Verbindung übertragen. Der konkret verwendete Transportkanal ist hierbei ohne Bedeutung. Als Übertragungskanal kann beispielsweise ein Mobilfunkdatenübertragungsverfahren wie GSM oder UMTS genutzt werden. Alternativ kann auch eine kabellose Verbindung, wie beispielsweise WLAN, zum Einsatz kommen.

Auf dem Endgerät 10 wird das verschlüsselt übertragene Content Management Objekt 14 mit Hilfe eines auf dem Endgerät 10 gespeicherten Schlüssels entschlüsselt. Dieser Schlüssel kann derart auf dem Endgerät 10 gespeichert sein, dass er nicht aus diesem ausgelesen werden kann. Zusätzlich kann statt des auf dem Endgerät 10 gespeicherten Schlüssels ein von diesem abgeleiteter Schlüssel verwendet werden. Ein auf dem Endgerät 10 gespeicherter Schlüssel wird auch als "Fuse Key" bezeichnet.

Nach dem Entschlüsseln des Content Management Objekts 14 kann das Endgerät 10 dieses verändern, aktualisieren oder eine andere Maßnahme an dem Content Management Objekt 14 ausführen.

Nachdem die gewünschte Maßnahme an dem Content Management Objekt auf dem Endgerät 10 durchgeführt wurde, wird das Content Management Objekt 14 erneut mittels des auf dem Endgerät 10 gespeicherten Schlüssels verschlüsselt und an den Server 12 über den gesicherten Übertragungskanal übertragen.

Die Sicherheit beim Verändern des entschlüsselten Content Management Objekts 14 kann weiter erhöht werden, indem das Content Management Objekt 14 in eine zusätzlich abgesicherte Umgebung (Trusted Execution Environment; TEE) auf dem Endgerät 10 übertragen wird.

Ferner können auch im Endgerät 10 zusätzliche Maßnahmen implementiert sein, so dass das an das Endgerät 10 übertragene Content Management Objekt 14 zumindest vorübergehend/ temporär in dem Endgerät zwischengespeichert werden kann (caching). Auf diese Weise kann, wenn es notwendig ist, ein Content Management Objekt 14 auch über einen definierten Zeitraum hinweg auf dem Endgerät 10 gespeichert werden und ohne Interaktion mit einem Server für bestimmte Operationen zur Verfügung zu stellen. In diesem Fall werden zusätzliche Sicherungsmaßnahmen auf dem Endgerät 10 vorgesehen, so dass das Content Management Objekt nicht von außen angegriffen werden kann. Zusätzlich oder alternativ kann die Cache-Verwaltung durch eine vertrauenswürdige Komponente des Systems (z.B. die Content Management Komponente selbst) durchgeführt werden (Cache Speicher im Shared-Memory). In Zusammenhang mit der Cache Verwaltung kann das Content Management Objekt gleichzeitig in zwei Versionen erzeugt werden; eine Version ist für den "on-device" Cache vorgesehen, die andere zur Speicherung am Server. Beide Versionen unterscheiden sich nur durch ein spezielles Attribut ("Source"), ansonsten sind sie inhaltsgleich. Damit kann bei der Ausführung unterschieden werden, von welcher Quelle das Content Management Objekt kommt; Operationen können so Objekte aus dem Cache ablehnen, sodass das Device gezwungen wird, mit dem Server zu interagieren.

Beim Verschlüsseln des Content Management Objekts 14 auf dem Endgerät 10 wird das Content Management Objekt 14 stets nur in einem solchen Umfang verschlüsselt, dass das verschlüsselte Objekt von dem Server 12 noch erkannt wird und richtig auf dem Server 12 abgelegt werden kann.

Nachdem der Server 12 das Content Management Objekt 14 an das Endgerät 10 übertragen hat, wird der Zustand des übertragenen Content Management Objekts 14 auf dem Server 12 auf "ungültig" gesetzt, weil sich das Content Management Objekt 14 auf jeden Fall durch den Schritt des erneuten Verschlüsselns ändert, selbst wenn keine Veränderung an dem Content Management Objekt vorgenommen wird. Somit gibt es stets nur einen gültigen Zustand bzw. eine gültige Version des Content Management Objekts 14, der/die nach der Handhabung des Content Management Objekts 14 auf dem Endgerät 10 auf dem Server 12 gespeichert wird.

In Fig. 2 sind die wesentlichen Schritte des erfindungsgemäßen Verfahrens anhand eines Flussdiagramms aufgezeigt. Nach Aufforderung durch das Endgerät 10 wird ein Content Management Objekt (CMO) 14 in einem ersten Schritt S11 von einem Server 12 an das Endgerät 10 übertragen. Der Übertragung kann eine fakultative, vorherigen Authentifizierung zwischen Endgerät 10 und Server 12 und die Einrichtung einer gesicherten Verbindung ("Secure Channel") durch ein geeignetes Protokoll (z.B. SCPxx) vorgeschaltet sein (Schritt 10).

Anschließend wird in einem Schritt S12 das Content Management Objekt 14 in dem Endgerät 10 entschlüsselt. Dazu kann ein in dem Endgerät 10 gespeicherter Schlüssel (Fuse Key) verwendet werden.

In einem nächsten Schritt S14 erfolgt eine Veränderung des Content Management Objekts 14 auf dem Endgerät 10 sowie anschließend (Schritt S16) ein erneutes Verschlüsseln des Content Management Objekts 14 im Endgerät.

In einem letzten Schritt S18 wird das verschlüsselte Content Management Objekt 14 zurück an den Server 12 übertragen und dort verschlüsselt abgespeichert.

### Bezugszeichenliste:

- 10: Endgerät
- 12: Server
- 14: Content Management Objekt
- S10 - S18: Verfahrensschritte

## Patentansprüche

1. Verfahren zur Handhabung von Content Management Objekten, durch welche globale Autorisierungsinstanzen auf einem Endgerät repräsentiert sind, das Verfahren aufweisend die folgenden Schritte:
- Übertragen (S11) eines verschlüsselten Content Management Objekts (14) von einem Server (12) an das Endgerät (10),
- Entschlüsseln (S12) des Content Management Objekts in dem Endgerät,
- Verändern (S14) des Content Management Objekts in dem Endgerät, und
- Verschlüsseln (S16) des veränderten Content Management Objekt in dem Endgerät, Übertragen (S18) des veränderten und verschlüsselten Content Management Objekts vom Endgerät an den Server, wobei zum Entschlüsseln des Content Management Objekts ein in dem Endgerät gespeicherter Schlüssel verwendet wird und nach dem Übertragen des Content Management Objekts von dem Server an das Endgerät der Zustand des Content Management Objekts auf dem Server auf ungültig gesetzt wird.

2. Verfahren nach Anspruch 1, **dadurch gekennzeichnet, dass** die Übertragung des Content Management Objekts in zumindest einer Richtung, insbesondere vom dem Server an das Endgerät und/oder von dem Endgerät an den Server, über einen gesicherten Übertragungskanal erfolgt.

3. Verfahren nach Anspruch 1 oder 2, **dadurch gekennzeichnet, dass** das Content Management Objekt in eine gesicherte Umgebung auf dem Endgerät übertragen wird.

4. Verfahren nach einem der vorhergehenden Ansprüche, **dadurch gekennzeichnet, dass** es sich bei dem in dem Endgerät gespeicherten Schlüssel um einen aus einem Fuse-Key abgeleiteten Schlüssel handelt.

5. Verfahren nach einem der vorhergehenden Ansprüche, **dadurch gekennzeichnet, dass** eine Übertragung des Content Management Objekts von dem Server an das Endgerät nur auf eine Anfrage durch das Endgerät stattfindet.

6. Verfahren nach einem der vorhergehenden Ansprüche, **dadurch gekennzeichnet, dass** eine Übertragung zwischen dem Server und dem Endgerät nur nach einer gegenseitigen Authentisierung stattfindet.

7. Verfahren nach einem der vorhergehenden Ansprüche, **dadurch gekennzeichnet, dass** unterschiedliche Content Management Objekte von unterschiedlichen Servern an das Endgerät übertragen werden können.

8. Verfahren nach einem der vorhergehenden Ansprüche, **dadurch gekennzeichnet, dass** das Content Management Objekt zumindest temporär in dem Endgerät zwischenspeicherbar ist.

9. Verwendung eines Servers und eines Endgerätes zur Handhabung von Content Management Objekten in einem Verfahren nach einem der vorhergehenden Ansprüche.

## Claims

1. Method for managing content management objects by which global authorization instances are represented on a terminal, the method comprising the following steps:
- Transmitting (S11) an encrypted content management object (14) from a server (12) to the terminal (10),
- Decrypting (S12) the content management object in the terminal,
- Modifying (S14) the content management object in the terminal, and
- Encrypting (S16) the modified content management object in the terminal,
- Transmitting (S18) the modified and encrypted content management object from the terminal to the server, wherein a key stored in the terminal is used to decrypt the content management object and after transmitting the content management object from the server to the terminal, the state of the content management object on the server is set to invalid.

2. Method according to claim 1, **characterized in that** the transmission of the content management object in at least one direction, in particular from the server to the terminal and/or from the terminal to the server, occurs via a secured transmission channel.

3. Method according to claim 1 or 2, **characterized in that** the content management object is transmitted into a secured environment on the terminal.

4. Method according to one of the preceding claims, **characterized in that** the key stored in the terminal is a key derived from a fuse key.

5. Method according to one of the preceding claims, **characterized in that** a transmission of the content management object from the server to the terminal takes place only upon a request by the terminal.

6. Method according to one of the preceding claims, **characterized in that** a transmission between the server and the terminal takes place only after a mutual authentication.

7. Method according to one of the preceding claims, **characterized in that** different content management objects can be transmitted from different servers to the terminal.

8. Method according to one of the preceding claims, **characterized in that** the content management object can at least temporarily be buffered in the terminal.

9. Use of a server and a terminal for managing content management objects in a method according to one of the preceding claims.

## Revendications

1. Procédé de manipulation d'objets de gestion de contenu par lequel des instances d'autorisation globales sont représentées sur un terminal, le procédé comportant les étapes suivantes :
- transmission (S11) d'un objet de gestion de contenu (14) d'un serveur (12) au terminal (10),
- décodage (S12) de l'objet de gestion de contenu dans le terminal,
- modification (S14) de l'objet de gestion de contenu dans le terminal, et
- codification (S16) de l'objet de gestion de contenu dans le terminal, transmission (S18) de l'objet de gestion de contenu modifié et codifié du terminal au serveur, un code mémorisé dans le terminal étant utilisé pour décoder l'objet de gestion de contenu et l'état de l'objet de gestion de contenu étant invalidé sur le serveur après la transmission de l'objet de gestion de contenu du serveur au terminal.

2. Procédé selon la revendication 1, **caractérisé en ce que** la transmission de l'objet de gestion de contenu a lieu au moins dans une direction, notamment du serveur au terminal et/ou du terminal au serveur, par un canal de transmission sécurisé.

3. Procédé selon la revendication 1 ou 2, **caractérisé en ce que** l'objet de gestion de contenu est transmis au terminal dans un environnement sécurisé.

4. Procédé selon l'une quelconque des revendications précédentes, **caractérisé en ce que** concernant le code mémorisé dans le terminal, il s'agit d'un code dérivé d'un code de fusion.

5. Procédé selon l'une quelconque des revendications précédentes, **caractérisé en ce qu'**une transmission de l'objet de gestion de contenu a lieu du serveur au terminal uniquement sur une demande formulée par le terminal.

6. Procédé selon l'une quelconque des revendications précédentes, **caractérisé en ce qu'**une transmission entre le serveur et le terminal n'a lieu qu'après une authentification réciproque.

7. Procédé selon l'une quelconque des revendications précédentes, **caractérisé en ce que** différents objets de gestion de contenu peuvent être transmis par différents serveurs au terminal.

8. Procédé selon l'une quelconque des revendications précédentes, **caractérisé en ce que** l'objet de gestion de contenu peut être mis en mémoire cache au moins temporairement dans un terminal.

9. Utilisation d'un serveur et d'un terminal pour manipuler des objets de gestion de contenu dans un procédé selon l'une quelconque des revendications précédentes.
